# EUROPEAN PATENT APPLICATION

(11) **EP 1 921 575 A1**
(43) Date of publication of application: **14.05.2008**
(21) Application number: 06023231.1
(22) Date of filing: 08.11.2006
(51) Int. Cl.: G06Q 10/00

(54) **A computer with a user interface comprising adjacent hexagon components for illustrating workflows**

(71) Applicant: Respons ApS, 6040 Egtved (DK)
(72) Inventor: Nielsen, Kurt Broberg, 6040 Egtved (DK)
(74) Representative: Medenwaldt, Robin

(57) **Abstract**

A computer apparatus with a display containing a dynamic, computer controlled user interface comprising a hexagon grid with adjacent hexagon fields in a dashboard like appearance. The user interface illustrates a workflow by hexagon components located in the hexagon fields and connected along their edges, wherein each graphical component represents a state in a stepwise process. A crossing of edges from one component to another component represents a step from one state to another state in the workflow. Preferably, an actual state in the workflow is illustrated by highlighting a component in the user interface.

## Description

### FIELD OF THE INVENTION

The present invention relates to computers with user interfaces that illustrate workflows. Especially, it concerns a computer apparatus with a display containing a dynamic, computer controlled user interface illustrating a workflow by adjacent graphical components, wherein each graphical component represents a state in a stepwise process.

### BACKGROUND OF THE INVENTION

Throughout the history of civilization, the human being has sought to improve processes and create value or competitive advantages through the use of technology. One particular area of technology has always captured the imagination of society at large - that of automation. It is a very appealing prospect for the human being to be able to transcend our limitation, and have objects of our creation do what we cannot accomplish ourselves.

Working with IT solutions for information management, one huge problem still awaits an adequate solution, that of "Information Lifecycle Management". The volume of information is growing exponentially and organizations are losing control and experiencing information melt-down.

In US patent application US2006218185 by Lemke, a construction document management system is disclosed, which deletes the appropriate documents at predetermined dates selected by the user. Preferably, at the construction closeout date, the entire database is provided to the owner along with the software program which allows the owner to search and retrieve any desired documents, and which automatically deletes documents upon their predetermined destruction date.

However, often, not the date for destruction is impossible, but the state that a document reaches. An improved system is disclosed in Japanese patent application JP2005258511 by Hatano Masaaki, wherein a life cycle management system of electronic documents is constituted so that a plurality of electronic documents are stored in a database or a file system on a computer, automatically executing such maintenance as the abandonment or saving of documents. This life cycle management system is provided with a means for storing maintenance time limit, reference frequency and significance for each electronic document, a means for defining and storing programmable conditional formulas for referring to and deciding the stored maintenance time limit, reference frequency and significance and jobs for maintenance for executing such actions as the abandonment of the documents, the movement of the documents to a storage container and the message issue to an end user in the document management system and a means for executing the jobs for maintenance.

Information Lifecycle Management (ILM) is one of the hot topics in the industry at the moment. Current systems for managing information and collaboration are reactive, however, in order to help users efficiently, systems need to be proactive. Prior art systems are, furthermore, tool oriented. Users get help with how to do things, but The Digital Asset Management (DAM) market never took off - systems were too difficult to implement and too monolithic - they could not change with organizations' needs. This whole area of managing information lifecycle is the "last frontier" in the office. Systems exist, but they are not intuitive and usually very difficult to implement. Current systems cannot be implemented gradually - the step is too big for many organizations.

At the heart of the matter are three important facts:
• IT information management systems are reactive rather than proactive. Business practices need to be engrained in IT solutions to help preserving discipline and ensure consistent operation.
• The language for training IT information management systems is inadequate for the average user. There is a need for an intuitive way to express instructions to the systems.
• IT information management systems treat the problem of managing information in organizations as a "defined" process where every piece of work is well understood. In fact, the need in an organisation for information management is normally not well known and, furthermore, is constantly changing. This calls for the so-called "empirical" model of "inspect and adapt".

There is a need in the art for facilitated programming of the lifecycle management. For programming sequences of actions on a general basis, Finite State Machines, are used for representation, for example a Moore or a Mealy machine. Finite State Machines comprises representations of states, event, transitions and actions. A state stores information about the past, i.e. it reflects the input changes from the system start to the present moment. A transition indicates a state change and is triggered by an event (could be a condition that would need to be fulfilled to enable the transition). An action is a description of one or more activities that is to be performed at a given moment, such as during a transition.

Especially, in complicated cases, the representation of Finite State Machines becomes complicated. Furthermore, programming such Machines is a complicated task. Thus, there is need in the art for simplification of the representation as well as simplification of the programming.

### DESCRIPTION / SUMMARY OF THE INVENTION

It is therefore the object of the invention to provide an apparatus with a more intuitive representation of life cycles of objects and processes, for example the handling of electronic documents. Furthermore, it is the object of the invention to provide an apparatus, where this intuitive representation can be easily integrated in a programming of lifecycles.

This object is achieved by a computer apparatus with a display containing a dynamic, computer controlled user interface comprising a hexagon grid with adjacent hexagon fields in a dashboard like appearance. The user interface illustrates a workflow by state hexagon components located in the hexagon fields and connected along their edges, wherein each state hexagon component represents a state in a stepwise process. A crossing of edges from one state hexagon component to another state hexagon component represents a step from one state to another state in the workflow. Preferably, an actual state in the workflow is illustrated by highlighting a state hexagon component in the user interface.

By the invention, a user interface is provided in which workflows, such as in production processes or document handling, are illustrated by an intuitively easy approach. The technical layout of the user interface reflects the entire sequential process and highlights the actual state of the object in the process. Thus, the user interface is directly linked to the object of interest for efficient tracing of a lifecycle of the object.

The lifecycle of the object may be directly linked, or even better, directly attached to the object of interest, for example a document. The invention takes this into account by the possibility of wrapping and transforming traditional documents, for example Microsoft® Word® files, images and other pieces of business information, for example spreadsheets, into compound objects with an attached life-cycle determining the evolution with responses to external stimuli. The invention offers by the user interface an intuitive way of describing a sequential lifecycle and incrementally refining it. Therefore, in a further embodiment, the invention comprises a computer apparatus according to any preceding claim, wherein the apparatus is configured to receive a first file of a first type and configured to form a second file of a second type by attaching a computer readable lifecycle to the first file, the lifecycle being dependent of the first type. Due to its similarity of organic behaviour with birth and death, the compound objects according to the invention are termed Organic Object.

In a further embodiment of the invention, state hexagons in the user interface are connected by a connection having an indication of an event triggering a crossing of the edges and performing actions. A connection may be illustrated by a transition bar along an edge of the state hexagon in the case of the state hexagon components having the same size as the hexagon fields. Alternatively, the connection is a further hexagon, namely a transition hexagon, placed symmetrically over an edge of a hexagon field and having edges mating the edges of two state hexagon state components.

In an even further embodiment, the user interface comprises at least two parts, namely the above mentioned interface representing the workflow of an Organic Object in the form of a dashboard as a first part and, linked thereto, a second part, which is a programming interface. The programming interface has a palette of possible events for to be chosen by the programming user, wherein the events are associated with indications or actions or both to be performed for changing from one state to another state in the workflow dashboard. Furthermore, the programming interface is configured to apply a connection between pre-chosen hexagons upon pointer indication on the selected event in the palette.

In a further practical embodiment, a hexagon is parted up into a number of minor, internal hexagons defining a structured stepwise action sequence within a single hexagon. This way, complex actions may be achieved in a single hexagon, making an overview of the workflow more simple for the user, because less hexagons are required.

Hexagon components, typically, have an entrance edge and an exit edge and for some of the hexagons, the entrance edge or the exit edge or both may be linked to a software routine to be executed automatically when changing from a first state to a second state represented by crossing the entrance edge or the exit edge.

In an embodiment that is especially useful for document handling and logistic processes, the apparatus is configured to show the dashboard in a 3-dimensional perspective view with varying heights of the hexagons of the dashboard, the height of a hexagon reflecting the number of objects, for example documents or production units, being in the specific state represented by the hexagon in the workflow. For example, a large height of a certain hexagon may be analogous to a huge pile of documents in a certain stage. The user will immediately get en overview of those states, where a pile up of documents is present. A likewise intuitive understanding is achieved, if a high hexagon reflects stages in a production line, where a high hexagon may, for example, reflect the fact that a high number of products are in the quality testing phase.

When using the invention, users can determine the lifecycle of data at birth and let the Organic Objects be proactive
• The planned interaction with the object is guaranteed.
• The right people get the right information at the right time - and act on it. An audit trail shows what happened. At the right time, the object will archive or delete itself. The lifecycle is a comprehensible concept for ordinary users.
• Procedure is enforced intuitively and works against the chaos in digital data.
• Users do not need to remember procedures. This becomes increasingly important as many users have to handle more complex jobs - we can no longer rely on extensive training

The invention may be used in a variety of applications. For example the user interface may illustrate
• the lifecycle of documents,
• an editorial workflow in media companies,
• events or changes on web-sites,
• spreadsheets with measurement results that need processing,
• remote control of sensors or robots, or
• illustration of the steps in a sequential production process.

The invention is highly suitable for document handling and web services. Another application is within computer games and animation, where the invention may be used for the programming. In this connection, the invention may be part of the logical behaviour of avatars. In term of the invention, an avatar would be an Organic Object.

Surveillance and control by distance is a further application of the invention. The invention can be used for easy programming of control steps and for representation of states and consequences when certain actions occur or have to occur. Such a system may imply the measurement of physical parameters that are taken into account.

In production processes, the invention may be applied for the programming of the process sequences themselves and for illustration of the process in an overall basis and as an illustration of the current step in the production sequence.

Operation of machines is a further field, where the invention may successfully employed. The term machine has to be understood broadly and includes production machines, TV apparatus, mobile telephones, and play toys. Concerning play toys, the Danish company Lego® is well known for toys that can be programmed in a simple programming language in order to make programming easy for even young children.

The invention may carry this ideology a step further due to the user friendly and easy accessible structure.

An even further application of the invention is the programming, representation and employment of software routines that act as artificial intelligent for strategic decisions in companies in order to be of help on the management level.

By employing the invention in the variety of application, as illustrated above, the invention may be a valuable tool for achieving consistent procedures within a company. The latter is an important issue in relation to ISO certifications, corporate governance and other scenarios where procedure has to be trackable and guaranteed.

### SHORT DESCRIPTION OF THE DRAWINGS

The invention will be explained in more detail with reference to the drawing, where
- FIG. 1: is a an example of a workflow illustration for a advertisement lifecycle in a journal or for web publishing;
- FIG. 2: is an example of a user interface according to the invention,
- FIG. 3: is an example of an extended user interface with programming capabilities,
- FIG. 4: illustrates programming of a hexagon state,
- FIG. 5: illustrates programming of a transition bar,
- FIG. 6: illustrates creation of a new hexagon,
- FIG. 7: shows a programming user interface with facilitating features,
- FIG. 8: is a first part of a flow diagram for the execution in connection with objects,
- FIG. 9: is a second part of a flow diagram for the execution in connection with objects,
- FIG. 10: show a compact hexagon,
- FIG. 11: illustrates connected parent and child states,
- FIG. 12: illustrates a 3-dimensional user interface,
- FIG. 13: illustrates a 3-dimensional overview of different object classes,
- FIG. 14: illustrates a simple life cycle illustration according to a further embodiment of the invention,
- FIG. 15: illustrates an alternative simple life cycle illustration according to a further embodiment of the invention,
- FIG. 16: illustrates an alternative 3 dimensional illustration.

### DETAILED DESCRIPTION / PREFERRED EMBODIMENT

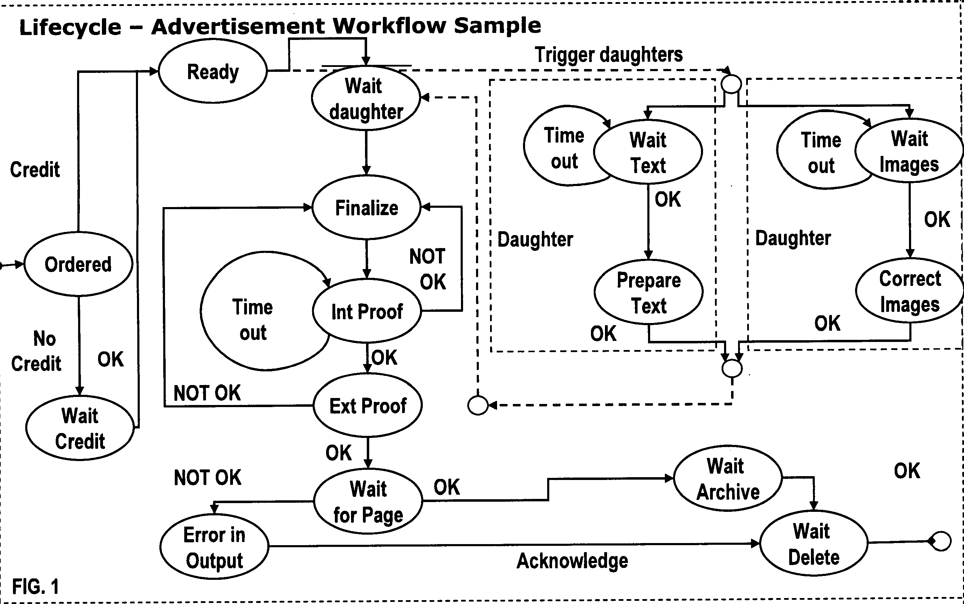

FIG. 1 is an example of a workflow illustration for a advertisement lifecycle in a journal or for web publishing. It contains several steps to be performed, before the proof is ready for printing, or it may be deleted in order not to remain as a left over in the archives. The object and advertisement in this case has a beginning and an end, constituting a complete lifecycle.

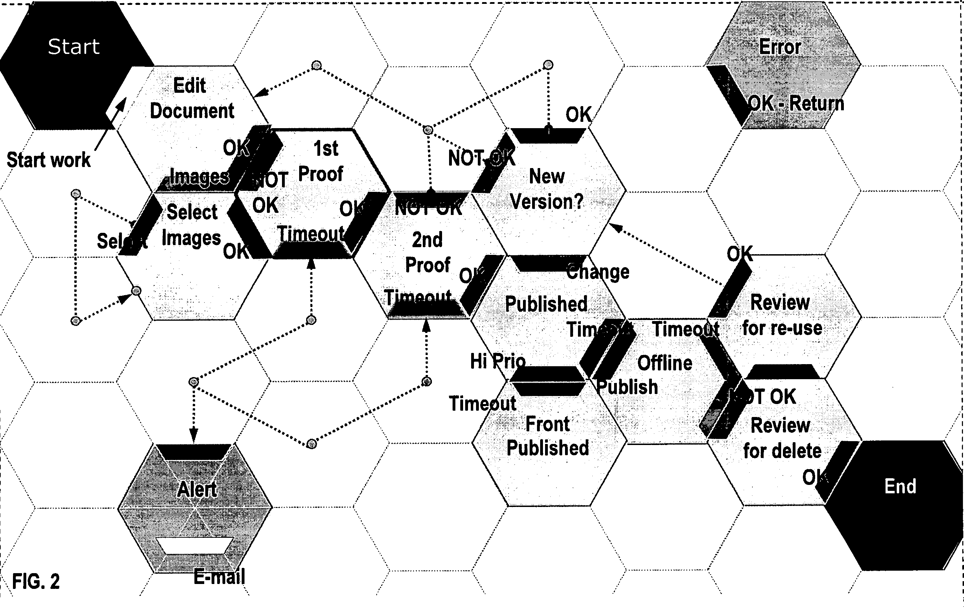

FIG. 2 illustrates an example of a workflow according to the invention. The object, in this case an article for publishing, has a start state illustrated by an "Start" hexagon and an end state where it is deleted and does not take up more space in the archive. Once, the init state has been started, a request is sent to a specific person to start work in connection with the document. The responsible person may by a pointer action on the user interface activate the transition bar with the event "start work" and will then be presented for a state in which the document is ready for editing. This may be accomplished by opening a document in a text editor program. The person may now type the text and add images if desired. When the editing is finished, the state may be changed by the editing person by activating the event "OK" in the transition bar in the right corner of the "Edit Document" hexagon. This activation may be made by a pointer action with a mouse as it is known from other user interfaces having a pointing and click action to be performed as command indications. The indication on the "OK" bar leads to a new state, where the document awaits a 1^{st} proof reading. If the document is not yet acceptable, it may be sent back to the editing person by activating the "NOT OK" transition bar by a pointer action. The state of the document is then reversed to the original state for editing.

Also possible is a timeout for a predetermined time, before an e-mail alert is automatically sent as a reminder of the fact that the predetermined time has lapsed and the document is in a state for 1^{st} or 2^{nd} proof again. When the second proof is accepted, is enters a publishing state, where it may be published during this state, may be changed to a high priority front publishing, or it may be set aside for a predetermined time by the command "Timeout". This enters an offline state, where it may be taken back to the publish state after the predetermined offline time, or it may be archived for later deletion or for re-use at a later stage. If it is found ready for deletion, the document reaches its final destination. The documents in the Published state do not directly go to the archived state, but pass through the off-line state where they may reside for some time, possibly again brought on-line. In the Published state, a change event may occur, the user is then asked, whether changes are to be made to a new version or on the current. In the affirmative, a new version will generated, otherwise the current one will be used; in both cases the object is back at the Edit Document State.

Likewise in connection with document handling, a document has a finite lifetime. The life cycle starts when a document is created and stops when the document is deleted or finally archived without any further action on the document. Analogous behaviour may be used for other objects, for example the production of a product, for which the production lifetime ends, once the production process is finished and the product leaves the factory. Another example is the lifetime of a web page, where the life starts, once a page starts in a creation process, and the life stops, when the page is discarded.

Thus, a variety of objects, such as but not limited to documents, web pages, products, may be transformed to compound objects with a limited lifetime and a life cycle that may be described by a Finite State Machine, which are widely accepted as the best way of describing logic transitions. Typically, the compound object is in a certain state, and when an event (stimulus) occurs, the object responds with a series of actions and possibility goes into a new state in response to this event. Examples of events are user interaction, messages from other objects, or reaching a certain time limit. Examples of actions are sending e-mails, triggering print, or moving to an archive.

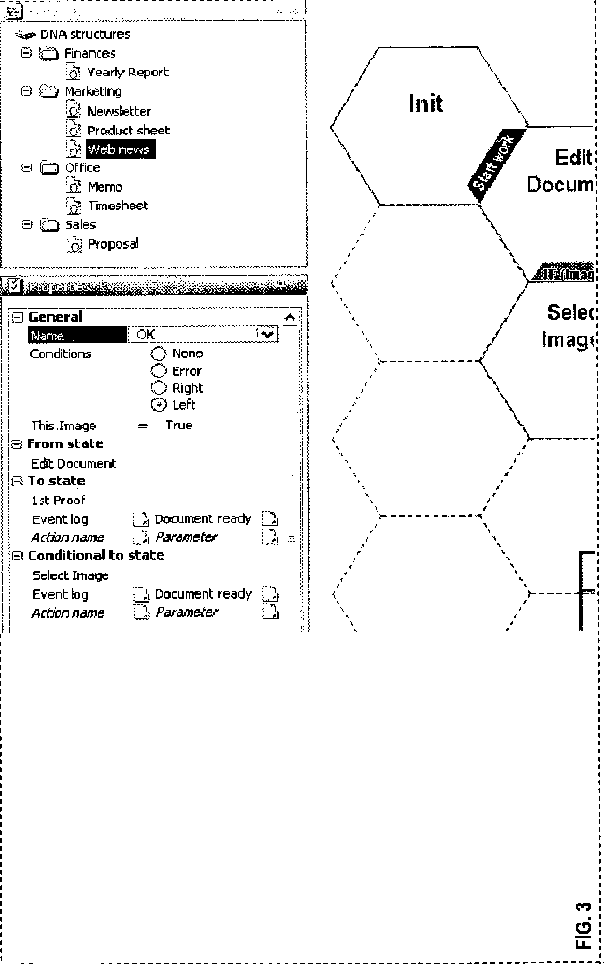

FIG. 3 illustrates to the right in the image a section of a user interface like the one in FIG. 2, where, however, the user interface is extended with a second part in the left of FIG.3. This second part of the user interface comprises a menu for programming. In the "Structure" menu, different kinds of predetermined types of workflows can be selected. In the current case, the type "Web news" is selected. In the submenu "Properties", the name can be specified and variables and events selected, which then appear as hexagons in the virtual hexagon dashboard.

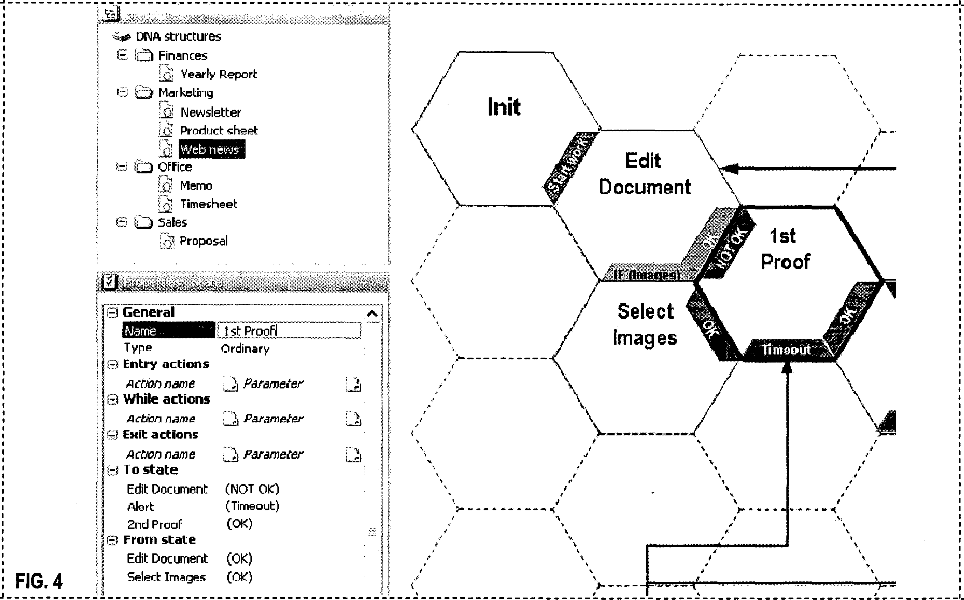

FIG. 4 illustrates a programming step in the user interface. After pointer indication of a specific hexagon, the hexagon may be given a name in the corresponding field in the "Properties: State" menu, where also the three transition bars with the event indications "NOT OK", "Timeout" and "OK" for the exit events are indicated as well the two entry events "OK" from "Edit Document" state and "Select Images" state.

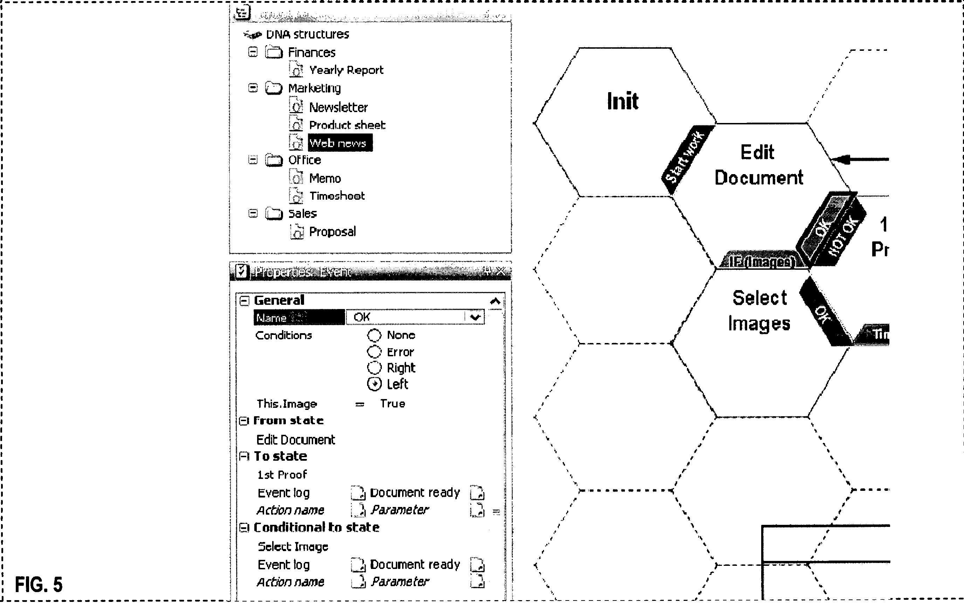

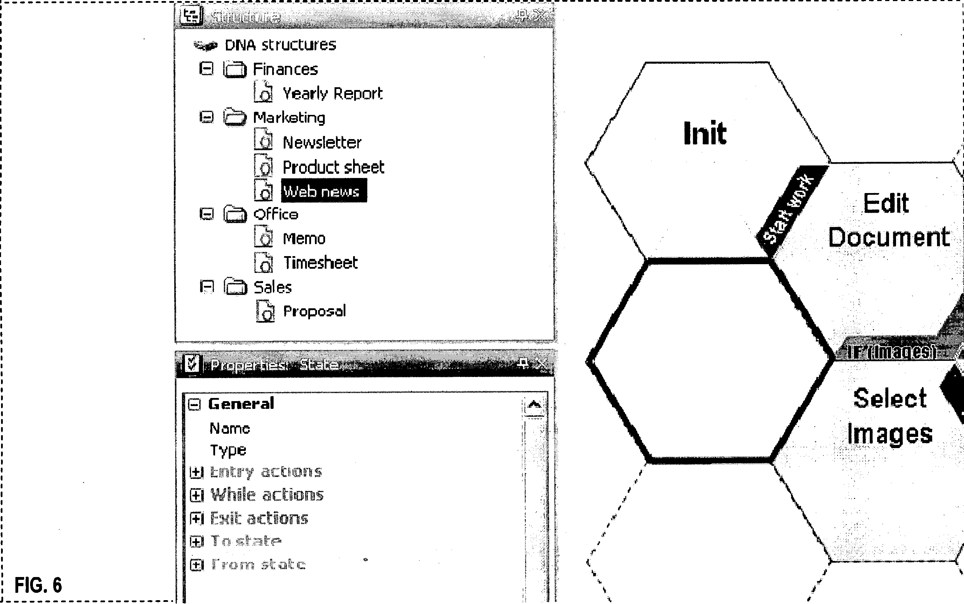

The programming of the entry-event "OK" from Edit documents is illustrated in greater detail in FIG. 5. If a new state hexagon should be applied, the user interface as illustrated in FIG. 6 is appropriate. The "Properties: State" menu offers the choice of indicating entry-actions, while-actions, exit-actions, and connection to and from other state hexagons. Each state hexagon has a unique identifier name, reducing risk for mistakes.

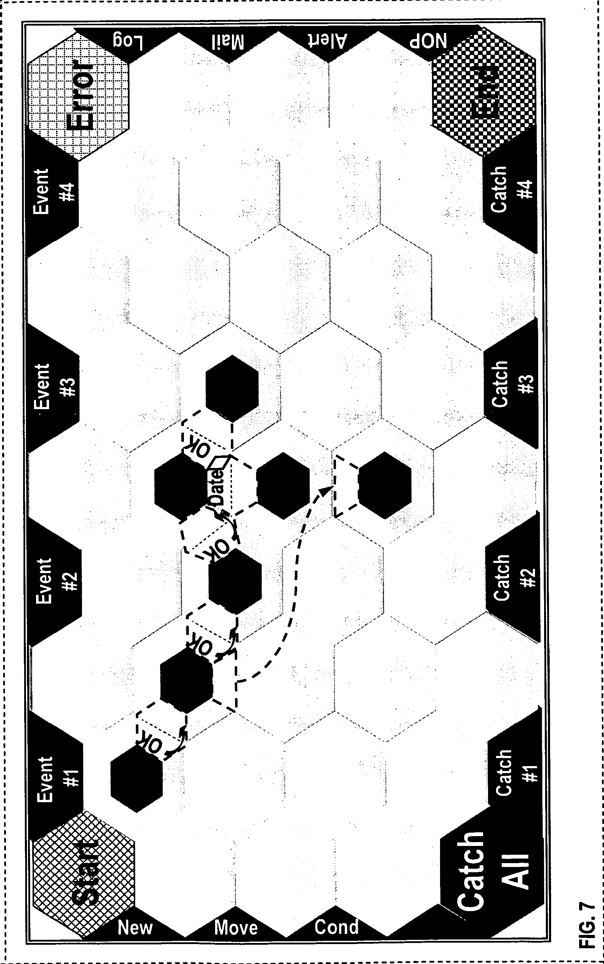

To create such a dashboard from the entire beginning, a user interface may be used as illustrated in FIG. 7. In this case, the state hexagons are not connected by bars on the hexagons themselves but by transition hexagons. As an activation of a transition hexagon automatically initiates the next state represented by a next state hexagon, a crossing of an edge from one state hexagon to a transition hexagon, in fact, implies a crossing of an edge from one state hexagon to another state hexagon. Thus, the transition hexagons take the same function as the transition bars as illustrated in FIG. 2.

As illustrated in FIG. 7, hexagons are placed at appropriate locations on the virtual dashboard, and the different state hexagons are given different states and are connected by transition hexagons selected among predetermined possibilities. Events are linked to the different transition hexagons. Such events may be linked by a drag and drop action with a pointer from an event menu or from the Event shortcuts at the top of the dashboard (half-hexagon) to the actual transition hexagon. A transition hexagon has two parts, one for each of the adjacent state hexagons. However, only one of these parts may be in use. An action sequence can be connected to a transition. A state hexagon may also have one or more action sequences: One, which can be defined for this and be indicated in the respective hexagon as also illustrated in FIG. 7. A state hexagon may have: 1. an action sequence that executes when the hexagon is entered (Entry). 2. an action sequence that executes when the hexagon is exited (Exit). 3. an action sequence that executes with intervals when in the hexagon (While). In case that two states are mutually linked but not placed edge to edge, arrows can be used to indicate the connection. However, preferably, state hexagons are connected edge to edge.

The dashboard has a number of elements along the edges, these will be explained in the following section:
1. The upper left corner has a full hexagon indicating the starting State. Every object has one of these.
2. Along the top of the dashboard a number of half-heaxgons are displayed. These represent shortcuts to frequently used Events and can be dragged and dropped onto transition hexagons to link a certain Event to a certain Transition.
3. At the upper right corner is a full hexagon indicating an Error State. An object will end in this state, if an Event occurs which is unexpected in the State that the object is in. This is the typically result of poor logic in the design of the lifecycle of the object in question, but could also occur in case a lifecycle description was corrupted.
4. Along the right edge are a number of triangles each representing short cuts to commonly used action sequences. These can be dragged and dropped onto Transition hexagons or State hexagons to specify the event for the object under the exact circumstance specified by the aforementioned hexagon.
5. At the lower right corner is a full hexagon called End, every object has an end to its Lifecycle in the same way it has a Start.
6. Along the bottom is a series of half-hexagons. These indicate so-called "Catchers". The meaning of these are: If an event occurs and a specific action sequence is desired for execution independently of the State in which the object may be, then he can specify a Catcher for this event. This is similar to exception handling in traditional programming. If one or more States handle the Event directly, this, naturally, takes precedence over the Catcher. The benefit of this it to greatly reduce the complexity of the lifecycle diagram whilst keeping the logic visible to the user.
7. At the lower left corner is a full hexagon, this is a Catch-all Catcher. With this, the user can decide to catch all Events for which nothing is specified in the current States of the object. If an Event has no match on the current State and it has no dedicated Catcher, the Catch-all will execute. This effectively leaves the Error hexagon only to handle corrupted Lifecycle descriptions.
8. Along the left border is a series of triangles each indicating certain Tools. Clicking with a mouse indicating pointer on one of these tools changes the behaviour of the user interaction with respect to what happens when clicking, dragging etc. Only a few are mentioned here:
   • A. "New" - click an empty hexagon space allows the user to define this hexagon (State or Transition). Dragging an Event onto a Transition assigns the Event to the Transition. Dragging an Action Sequence to a Transition or a State (Entry, Exit or While) assigns the Action Sequence.
   • B. "Move" - Clicking and dragging hexagons for moving them around on the Dashboard.
   • C "Conditional" - by clicking an empty Transition hexagon, it becomes a "Conditionl Transition".

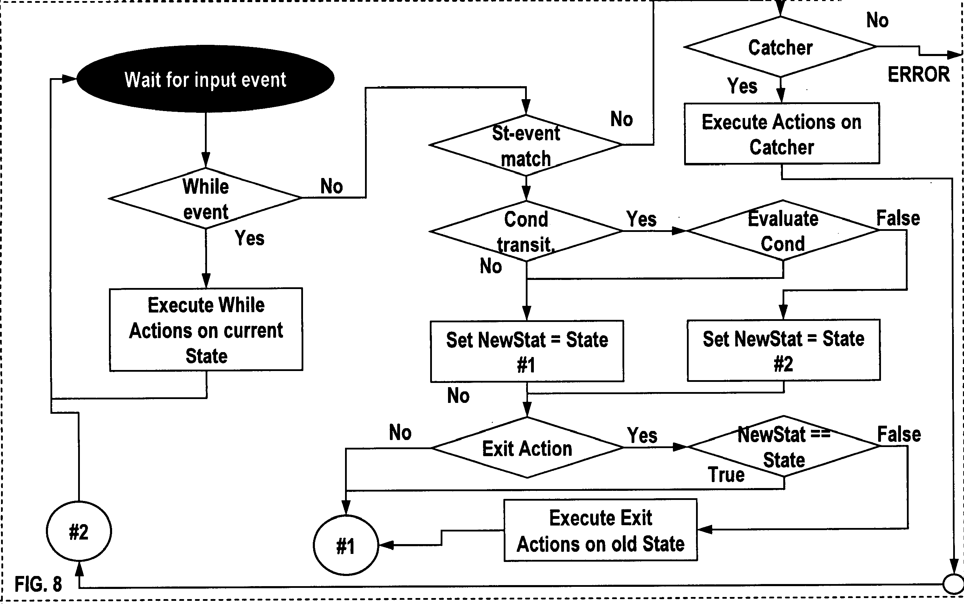

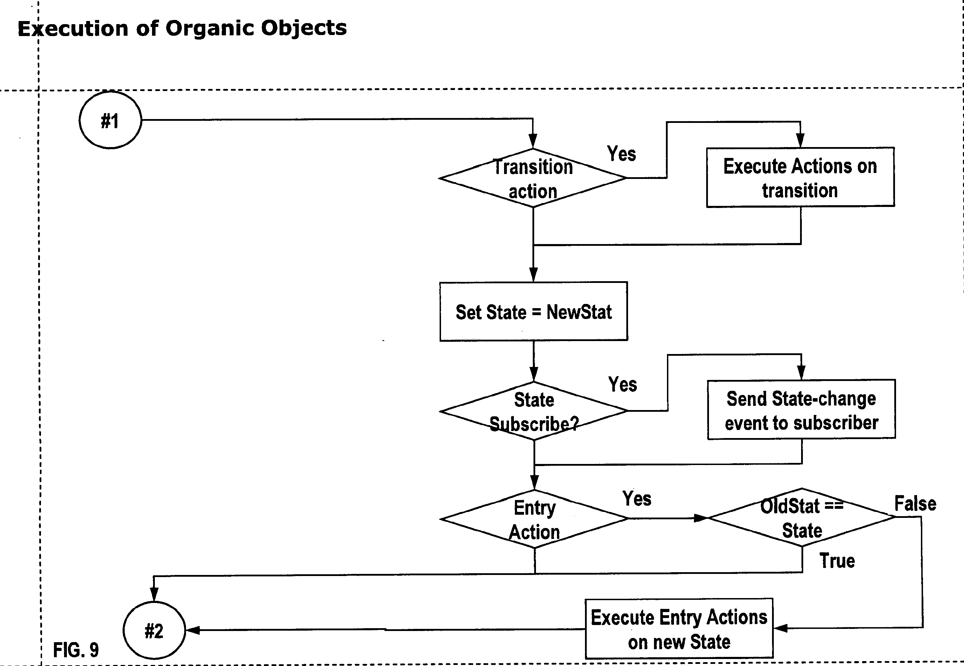

The execution of objects is described by a flow diagram in FIG. 8. and FIG. 9.
1. Every object acts asynchronously with respect to all the other objects, almost as a thread in traditional programming. The object waits (Idle) in a State until an event occurs then the following happens.
2. It is evaluated whether the event received is a timeout from a While condition on the current State. In the affirmative, the defined While action sequence is executed and the object returns to Idle.
3. If not, it is evaluated whether there is a match (ST-event match) for the received Event in the current State, i.e. if a Transition is defined for the Event.
4. If no transition is defined, it is evaluated if there is a Catcher for this event. If not, the object ends in the Error State.
5. If a Transition is defined, it is evaluated whether it is a conditional transition, If yes the condition is evaluated.
6. Depending on, whether the transition was conditional or not, the corresponding new State is selected.
7. If there is an Exit Action Sequence on the current state and the new state is going to be different than the current one, this Action Sequence is executed.

After point 6 and 7, the flow diagram continues in FIG. 9
8. If an Action Sequence is defined on the Transition, it is executed.
9. The State is changed to the new one
10. If there is a subscriber to State changes on this object (this objects mother object) a state-change-event is sent to this subscriber.
11. If there is an entry action on the new state, and the state has actually changed, the entry Action Sequence is executed.

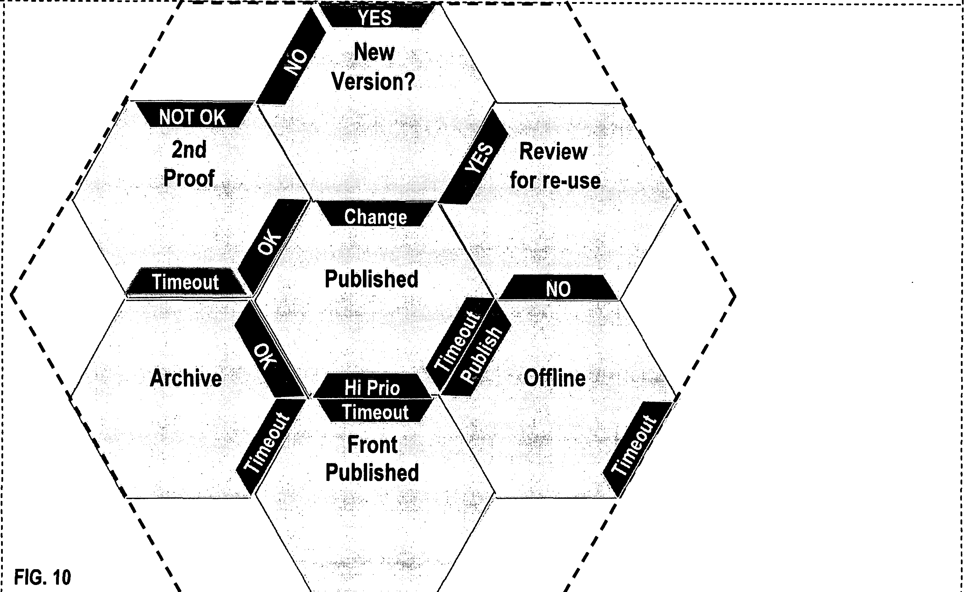

In order to provide an overview for the user, it may, in certain circumstances, be of convenience to provide a compact dashboard. It is, thus, possible to combine a number of states and transitions, for example 3, 5 or 7 in a single composite hexagon. An example of a 7-state composite hexagon is illustrated in FIG. 10.

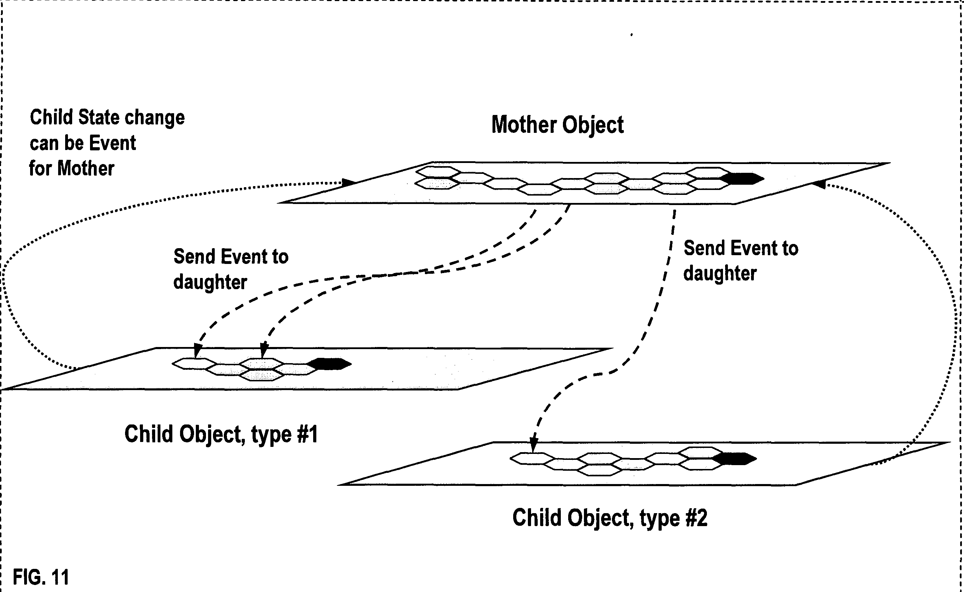

FIG. 11 illustrates the fact that objects may be connected to child objects. For example, the state of a certain document may have influence on the state of related objects, such as images related to the document. The images may have to be amended in line with the amendments in the text of the document. Thus, certain states, for example a further proof editing may imply that also the images are proof read before release of the document as an article on the Internet, for example. The relationship is illustrated in a 3-dimensional view in FIG. 11. The principle is that higher level objects (a Mother-object) can send Events to lower level objects (a Daughter-object), and thus trigger changes and actions. Mother-objects can also subscribe to State changes in Daughter-objects and thus take action when certain things happen in the Daughter-object.

Another example in which objects are related to child objects is in the case of animation and computer games. For example, an avatar may be an Organic Object with a lifecycle which may be represented by a dashboard according to the invention. As avatars interact, such interaction may be represented by connection between different Organic Objects on a parent object and child object basis as explained in connection with FIG. 11.

Finite state machines are well known, but typically it is a programmer's job to build the sequential description for the life cycle. Our aim was to produce a simple, intuitive user interface that lets ordinary users take this responsibility. As mentioned above, states can be dragged to the canvas by a drag and drop pointer action. Connecting arrows are dragged from state to state. Actions are chosen from a list of possible options, parameters are configured. Test runs let the user verify that the object (which is like a little robot) does what is expected. In establishing clear and understandable semantics and vocabulary, the invention makes it easier for the user to adopt the technology.

In connection with handling of electronic documents, the well-known concept of folders may be applied where the user operates the system in a familiar way without the requirement to learn a new complex tool. According to a certain embodiment of the invention, files, for example document files, are changed by the computer apparatus according to the invention such that they get a computer readable lifecycle description attached to the files. Such a lifecycle may be illustrated in a user interface according to the invention, where users can see the different actions and states and may, for instance, study those tasks that are required by themselves within the lifecycle. This way, the invention offers a much more extensive information system for each file extending the ordinary file system of today, often, only offering name and modification date.

The invention also comprises a browser interface where queries can be posted and result-sets inspected. A complete audit trail of the life of the objects is stored. The invention may be used to control workflow, collaboration, approval of documents, archiving of documents and many other office based tasks.

The user interface according to the gives the user an immediate view of the available objects. Objects and states needing attention by the user appear immediately. Actions can be triggered and interaction with other users may take place instantly across the Internet, alerts of approaching deadlines and other events can be given in a user friendly way.

The invention may be used in connection with
• Organic Business forms, timesheets and the like. Email processor.
• Editorial workflow in Media Companies.
• Public Administration with strict rules for sign of on documents.
• Organic Objects as intelligent agents, watching for file system Events or changes on web-sites
• Spreadsheets with measurement results that need processing
• Programming of TV to alert, start or record special programs
• Programming of light control and alarm control in domestic houses
• Programming of appliances
• The private or public sector handling of documents
• Programming of mobile telephones
• Micro remote control of small sensors and robots in the general industry. One particular interesting area is the new mesh networks of so-called "motes", small computers with sensors communicating with wireless technology. By empowering the ordinary user to program these devices huge opportunities exists. Technology already in existence

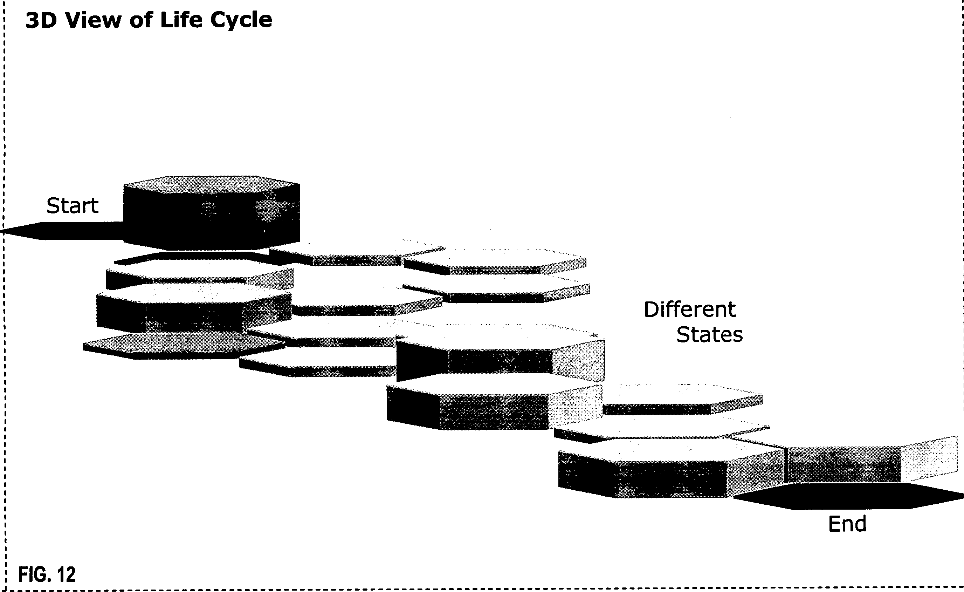

In cases, where the invention is used for sequential processes, such as web-services, where documents are traversing different states for treatment, the number of documents located in the different steps may be illustrated in a 3D representation of the user interface, such that each step has a height reflecting the number of documents located in the step process. This is illustrated in FIG. 12. For example, in the case where the invention is used for a web publishing process, where documents with articles are reviewed and undergo further consecutive steps, such a 3D illustration makes an immediate recognition of back-log at certain steps visible and gives a thorough overview of the flow of the documents through the system.

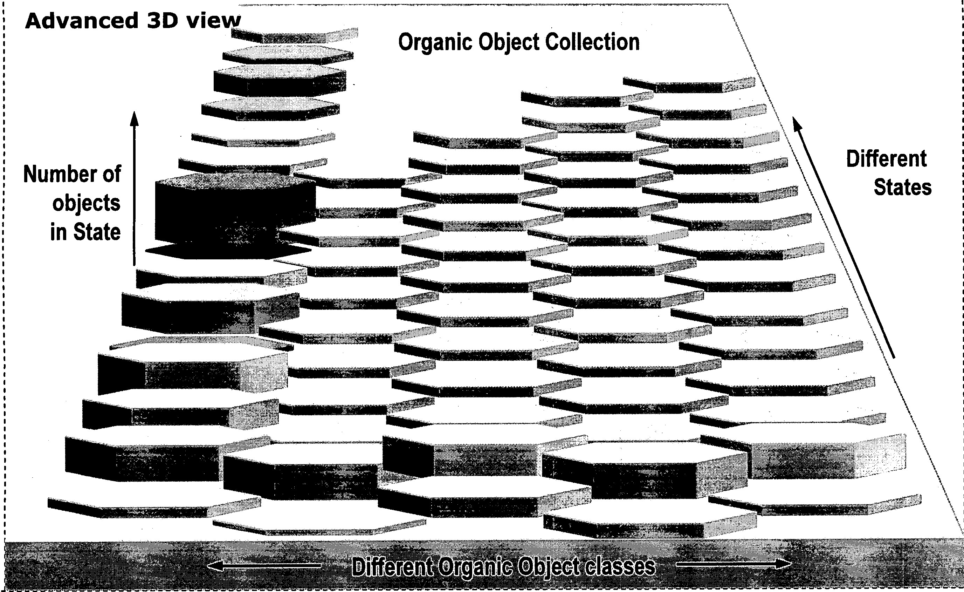

An extension of this is shown in FIG 13, where a three dimensional view of several classes of objects is presented. In this way, a user can have a complete map oriented 3D overview of his population of objects and the user interface can allow the user to have an overview over the "landscape" and zoom in on areas that attracts his attention. In this way the user has an overview with maximum richness, allowing him to further improve his lifecycle management of objects.

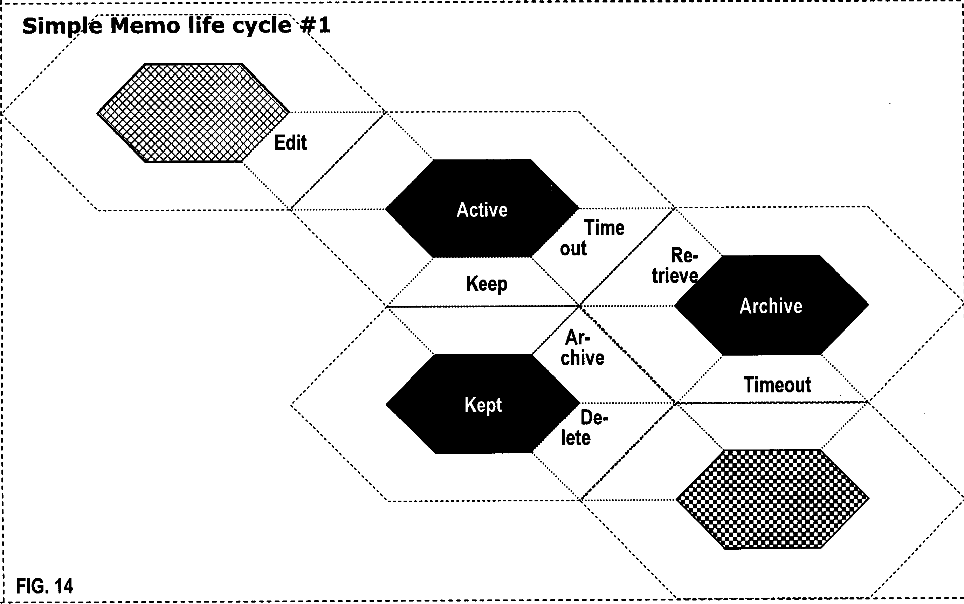

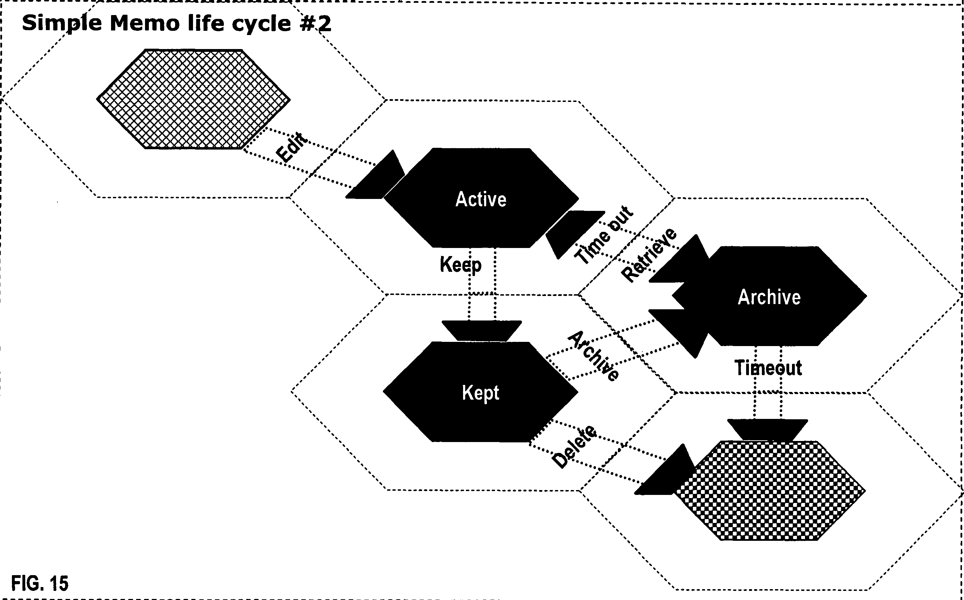

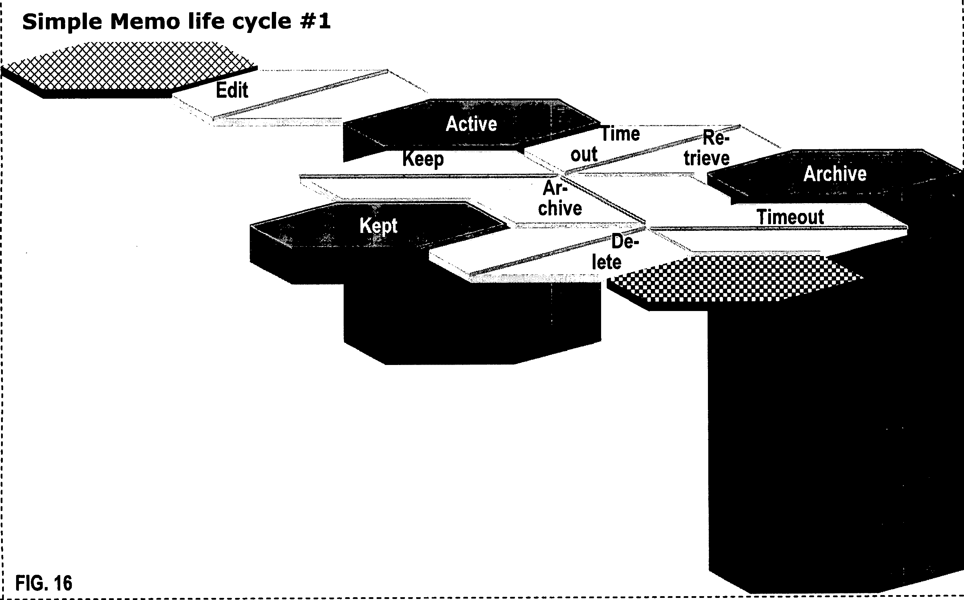

FIG. 14, 15 and 16 show alternate representation for the same lifecycle for a simple memo document. FIG. 14 illustrates elongated hexagons connected by with half-hexagons. In FIG. 15, the half hexagons of FIG. 14 for the transitions are replaced by arrows that indicate the possible directions of transitions. An alternative three dimensional illustration is shown in FIG. 16.

## Claims

1. A computer apparatus with a display containing a dynamic, computer controlled user interface illustrating a workflow by adjacent graphical components of a first type, wherein each graphical component of the first type represents a state of an object in a stepwise process, **characterised in that** the user interface comprises a hexagon grid with adjacent hexagon fields in a dashboard like appearance and wherein the graphical components of the first type are state hexagon components located in the hexagon fields and connected along their edges, wherein a crossing of edges from one state hexagon component to another state hexagon component represents a step from one state to another state in the workflow.

2. A computer apparatus according to claim 1, wherein the computer apparatus is programmed to illustrate an actual state in the workflow by highlighting a state hexagon component in the user interface.

3. A computer apparatus according to claim 1 or 2, wherein to state hexagons are connected by a connection having an indication of an event triggering a crossing of the edges and performing of actions, the connection being a transition bar along an edge of the state hexagon in the case of the state hexagon components having the same size as the hexagon fields or the connection being a transition hexagon placed symmetrically over an edge of a hexagon field and having edges mating the edges of two state hexagon components.

4. A computer apparatus according to any preceding claim, wherein the a hexagon grid with adjacent hexagon fields in a dashboard like appearance comprises edge fields with different type of events or commands or both configured for drag and drop actions inside the dashboard.

5. A computer apparatus according to any preceding claim, wherein the user interface comprises a first part and a second part, the second part being linked to the first part, the first part being a workflow-representing interface in the form of a dashboard and the second part being a programming interface, the programming interface having a palette of possible events, the events being associated with indications or actions or both to be performed for changing from one state to another state in the workflow dashboard, the programming interface being configured to apply a connection between pre-chosen hexagons upon pointer indication on the selected event in the palette.

6. A computer apparatus according to any preceding claim, wherein a state hexagon is parted up into a number of minor, internal hexagons defining a structured stepwise action sequence within a single state hexagon.

7. A computer apparatus according to any preceding claim, wherein a state hexagon component has an entrance edge and an exit edge and wherein the entrance edge or the exit edge or both are linked to a software routine to be executed automatically when changing from a first state to a second state represented by crossing the entrance edge or the exit edge.

8. A computer apparatus according to any preceding claim, wherein the apparatus is configured to show the dashboard in a 3-dimensional perspective view with varying heights of the state hexagons of the dashboard, the height of a state hexagon reflecting the number of objects being in the specific state represented by the hexagon in the workflow.

9. A computer apparatus according to any preceding claim, wherein the apparatus is configured to receive a first file of a first type and configured to form a second file of a second type by attaching a computer readable code to the first file, the computer readable code representing a programmed lifecycle that is dependent of the first file.

10. A computer apparatus according to any preceding claim, wherein user interface illustrates
• the lifecycle of documents,
• an editorial workflow in media companies,
• events or changes on web-sites,
• spreadsheets with measurement results that need processing,
• remote control of sensors or robots, or
• illustration of the steps in a sequential production process.
